# DEMANDE DE BREVET EUROPEEN

(11) **EP 0 955 792 A1**
(43) Date de publication de la demande: **10.11.1999**
(21) Numéro de dépôt: 99410066.7
(22) Date de dépôt: 05.05.1999
(51) Int. Cl.: H05B 39/09, F21L 11/00

(54) **Perfectionnement pour dispositif d'éclairage**

(30) Priorité: 06.05.1998 FR 9805977
(71) Demandeur: Caligo, 74960 Cran Gevrier (FR)
(72) Inventeur: Bernault Jean-Francois, 74000 Annecy (FR)
(74) Mandataire: Gasquet, Denis

(57) **Abrégé**

La présente invention concerne un dispositif d'éclairage et plus particulièrement un perfectionnement permettant d'économiser l'énergie consommée.

## Description

La présente invention concerne un dispositif d'éclairage et plus particulièrement un perfectionnement permettant d'économiser l'énergie consommée.

Les dispositifs d'éclairage individuels sont très largement utilisés soit à titre professionnel, Soit à titre privé ou sportif. C'est le cas des lampes torche que l'utilisateur doit tenir à la main, mais aussi des lampes dites frontales, disposées directement sur la tête de l'utilisateur, grâce, par exemple, à un bandeau, ou indirectement et sont alors fixées sur des casques. Les lampes frontales actuellement commercialisées sont déjà très perfectionnées, mais les piles ou batteries utilisées sont assez vite hors d'usage, car dans le cas de certaines applications, l'utilisateur aura besoin d'un bon éclairage. Afin d'économiser l'alimentation, certains constructeurs ont prévu d'utiliser, soit une ampoule comprenant deux filaments, soit deux ampoules. Dans le cas d'une ampoule à deux filaments, l'un des filaments donne peu d'éclairage, afin d'économiser les piles, tandis que l'autre des filaments, qui permet un meilleur éclairage n'est mis en service qu'en cas de besoin, compte tenu de sa forte consommation d'énergie. Dans le cas d'un dispositif à deux ampoules, une des deux ampoules de faible consommation est utilisée dans le cas d'un faible besoin, tandis que l'autre ampoule de plus fort éclairage, mais aussi de forte consommation est utilisée en cas de besoin.

Tous ces dispositifs sont coûteux et peu satisfaisants, et la présente invention propose un dispositif fiable et économique, permettant avec des moyens tout à fait simples, d'avoir deux modes d'éclairage, à savoir un éclairage puissant quand il y a nécessité, et un éclairage moins important, plus traditionnel, mais de très faible consommation.

Selon la caractéristique principale du dispositif d'éclairage de l'invention, celui-ci est caractérisé en ce qu'il comprend au moins une ampoule alimentée en courant continu par une source d'énergie électrique, tel que des piles ou des batteries et des moyens pour économiser l'énergie consommée par l'ampoule, les dits moyens provoquant une succession de chutes de tension et en ce que le dispositif d'éclairage est une lampe frontale.

Selon une caractéristique complémentaire du dispositif d'éclairage de l'invention, les moyens d'économie sont constitués par un circuit électronique comprenant au moins un circuit de commande commandant un interrupteur électronique.

Selon une autre caractéristique du dispositif d'éclairage de l'invention, celui-ci est caractérisé en ce que la lampe frontale comprend un boîtier d'ampoule et un boîtier de piles portés par un bandeau et en ce que les moyens d'économie sont constitués par un circuit électronique disposé dans le boîtier de pile ou dans le boîtier d'ampoule.

Selon le mode de réalisation préféré du dispositif d'éclairage, le circuit électronique est disposé dans le boîtier de piles.

Selon ce mode de réalisation préféré, le circuit électronique est disposé dans le boîtier de pile à l'extrémité supérieure de l'emplacement destiné à la pile, il présente sur sa face inférieure deux contacts qui viennent coopérer avec les pôles de la pile.

Selon une caractéristique complémentaire du dispositif d'éclairage de l'invention, il est prévu un interrupteur manuel permettant de passer d'un mode de fonctionnement normal assurant le plein éclairage, à un mode de fonctionnement économique, avec un plus faible éclairage, mode de fonctionnement selon lequel les moyens d'économie sont mis en fonctionnement, lors du fonctionnement normal de plein éclairage, l'ampoule est alimentée en permanence à la tension maximale, délivrée par les piles et assure donc un éclairage maximal, tandis que lors du fonctionnement économique, selon lequel l'ampoule est alimentée alternativement en tension maximale, pendant un temps, de pleine tension et en tension inférieure, pendant un temps de tension inférieure et ainsi de suite, ainsi, à une tension maximale succède une tension inférieure suivie d'une tension maximale, à laquelle succède une tension inférieure et ainsi de suite.

Selon une autre caractéristique du dispositif d'éclairage, le circuit de commande est un générateur de signaux du type circuit intégré générant des impulsions.

Selon une caractéristique complémentaire du dispositif d'éclairage, celui-ci est caractérisé en ce que le générateur de signaux est alimenté directement par la ou les piles du dispositif d'éclairage au travers d'une diode de signal de type Schottky, qui permet de protéger le circuit intégré en cas d'inversion de polarité et ainsi, prévenir de tout montage erroné au niveau de la ou les piles ou batteries.

Selon un mode de réalisation du dispositif d'éclairage, l'interrupteur manuel raccordé directement à l'interrupteur électronique court-circuite ce dernier et permet à la lampe d'être alimentée directement par la ou les piles ou batteries.

Selon un exemple de réalisation du dispositif d'éclairage, le générateur d'impulsion génère des impulsions de commandes à 300 Hertz, dont le rapport cyclique est voisin de 45%.

D'autres caractéristiques et avantages de l'invention se dégageront de la description qui va suivre en regard des dessins annexés qui ne sont donnés qu'à titre d'exemples non limitatifs.
La figure 1 est une vue schématique du dispositif d'éclairage de l'invention.
Les figures 2 et 3 sont des vues illustrant le mode de fonctionnement, selon lequel l'ampoule est alimentée selon la tension maximale.

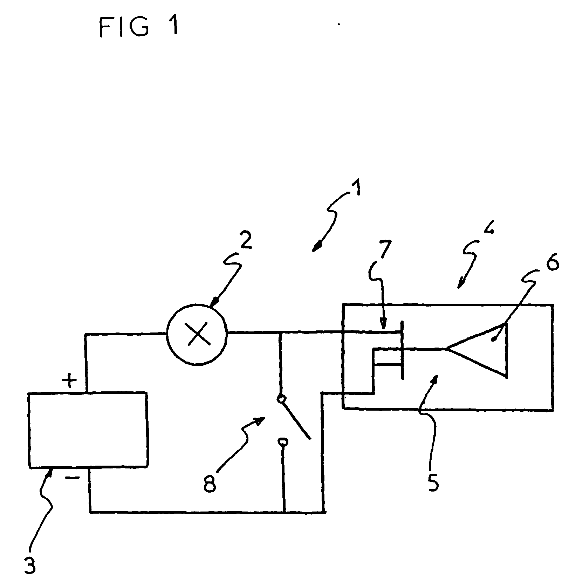

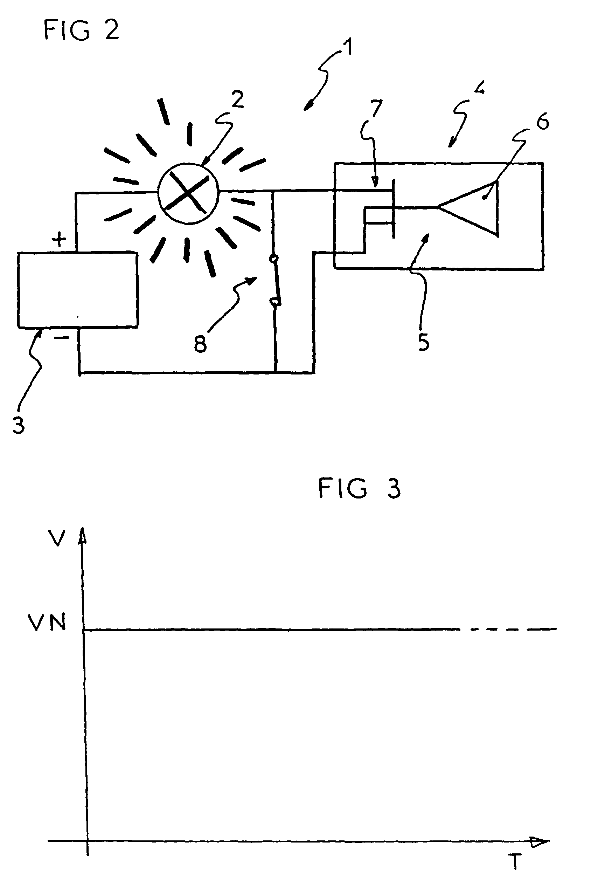

La figure 2 est une vue similaire à la figure 1.
La figure 3 montrant la valeur de la tension d'alimentation dans un graphique avec en ordonnées le temps et en abscisses, la valeur de la tension.

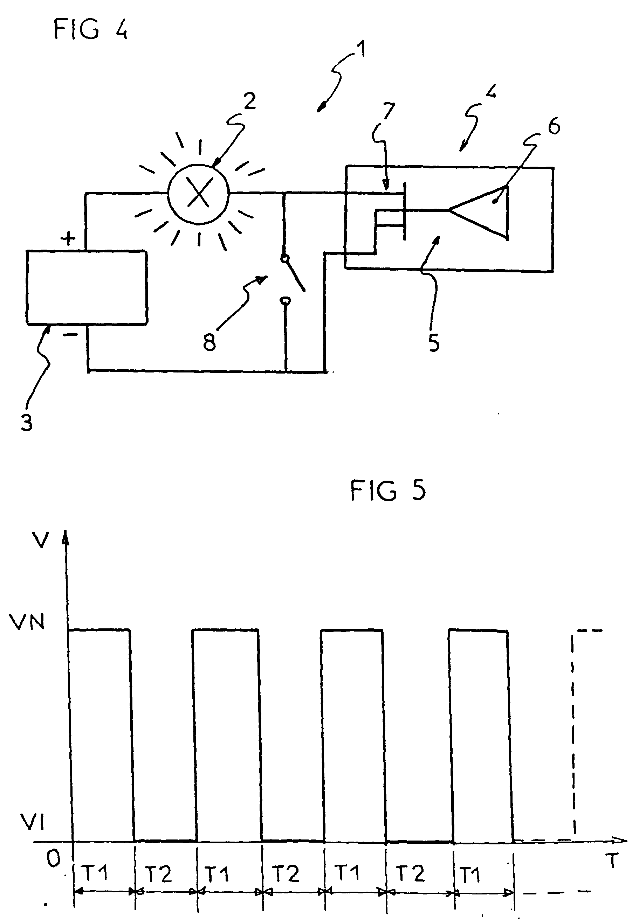

Les figures 4 et 5 sont des vues illustrant le mode économique de fonctionnement, selon des figures similaires aux figures 2 et 3 du premier fonctionnement.

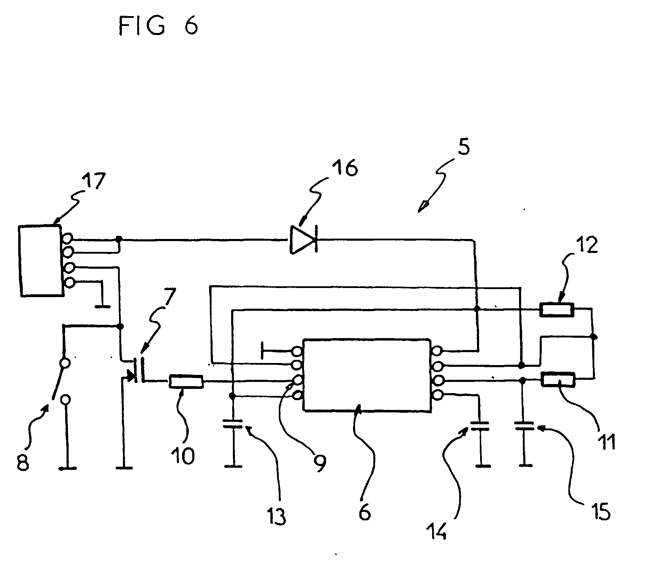

La figure 6 est une vue synoptique, représentant une construction possible d'un circuit électrique.

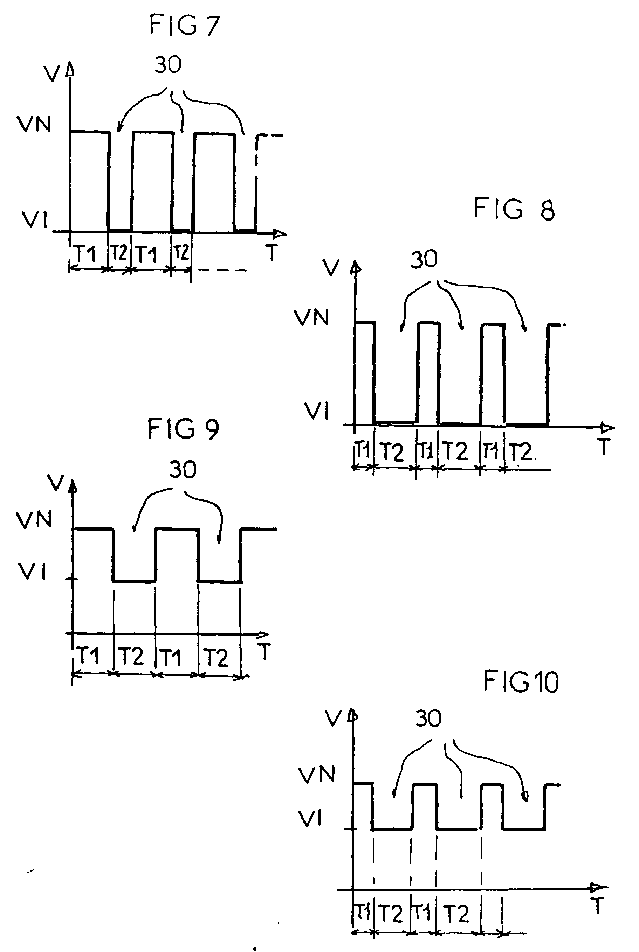

Les figures 7, 8, 9 et 10 sont des vues similaires à la figure 5 montrant des variantes d'exécution de hachage de la tension.

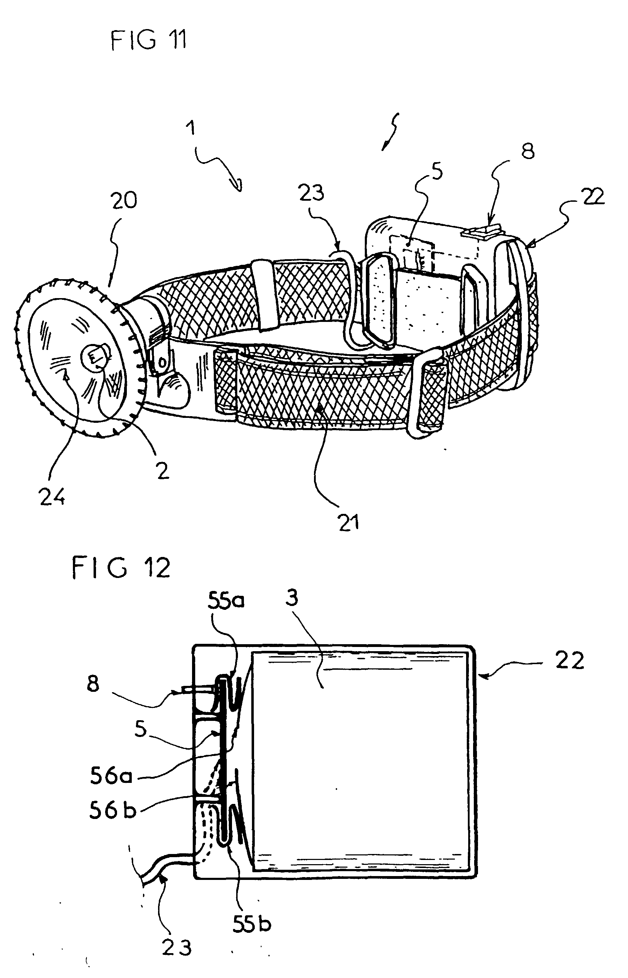

La figure 11 illustre la lampe frontale muni du dispositif d'éclairage de l'invention.
La figure 12 illustre le boîtier de la lampe frontale.

Le dispositif d'éclairage portant la référence générale (1) est destiné à être utilisé dans une lampe frontale (50), il comprend au moins une ampoule (2) alimentée en courant continu par une source d'énergie électrique, tel que des piles ou des batteries (3), et comprend, selon l'invention des moyens (4) pour économiser l'énergie par l'ampoule (2). Les dits moyens (4) permettant de provoquer des successions de chutes de tension (30), comme nous le verrons plus loin dans la description. Selon le mode d'exécution préféré, les moyens d'économie (4) sont constitués par un circuit électronique (5) comprenant au moins un circuit de commande (6) commandant un interrupteur électronique (7). Il est prévu un interrupteur manuel (8) permettant de passer d'un mode de fonctionnement normal assurant le plein éclairage, à un mode de fonctionnement économique, avec un plus faible éclairage, mode de fonctionnement selon lequel les moyens d'économie (4) sont mis en fonctionnement.

Le dispositif de l'invention comprend donc deux modes de fonctionnement.

Un premier mode de fonctionnement, en mode de plein éclairage, illustré aux figures 2 et 3, selon lequel l'ampoule est alimentée en permanence à la tension maximale (VN), délivrée par les piles (3) et assure donc un éclairage maximal.

Un deuxième mode de fonctionnement ou mode de fonctionnement économique, tel qu'illustré aux figures 4 et 5, selon lequel l'ampoule est alimentée alternativement en tension maximale (VN), pendant un temps (T1), de pleine tension et en tension inférieure (VI), pendant un temps (T2), de tension inférieure et ainsi de suite. Ainsi, à une tension maximale (VN) succède une tension inférieure (VI) suivie d'une tension maximale (VN), à laquelle succède une tension inférieure (VI) et ainsi de suite comme cela apparaît plus particulièrement à la figure 5 et aux figures 8, 9, 10 et 11.

Le passage d'un mode de fonctionnement à l'autre et inversement se fait grâce à l'interrupteur manuel (8).

On comprendra que dans le premier mode de fonctionnement, selon lequel la tension maximale (VN) est maintenue, l'ampoule (2) produit son plein éclairage de fonctionnement, tandis que dans le deuxième mode de fonctionnement, l'ampoule (2) est successivement alimentée en tension maximale (VN) et tension inférieure (VI) et consomme ainsi beaucoup moins d'énergie.

Il va de soi, que les baisses successives de tension d'alimentation sont de courtes durées (T2), comme par exemple, et sont totalement imperceptibles, à l'exception près que l'ampoule (2) éclaire moins que dans le premier mode de fonctionnement, quand elle est alimentée en permanence en tension maximale (VN). Le plus faible éclairage est dans la plupart des cas suffisant et la consommation en énergie est alors faible, ce qui permet d'avoir une durée de vie des piles ou des batteries importante. Bien entendu, pour des utilisations particulières, l'utilisateur peut, grâce à l'interrupteur manuel, passer du mode selon lequel l'ampoule est alimentée en tension maximale permanente, afin d'obtenir un éclairage important.

La figure 6 illustre un exemple de réalisation d'un circuit électronique (5), selon l'invention qui comprend un circuit de commande (6), tel qu'un générateur de signaux commandant un interrupteur électronique (7). A cet effet, le générateur de signaux (6) est relié par sa patte (9) audit interrupteur (7) par l'intermédiaire d'une résistance (10). Le générateur de signaux (6) génère au niveau de sa patte (9) des impulsions pour la commande de l'interrupteur électronique de puissance (7). Par ailleurs, le générateur de signaux (6) qui est un micro circuit intégré dit MN1 est alimenté directement par la ou les piles (3) du dispositif d'éclairage au travers d'une diode de signal de type Schottky (16), qui permet de protéger le circuit intégré en cas d'inversion de polarité et ainsi, prévenir de tout montage erroné au niveau de la ou les piles ou batteries (3). Le circuit comprend, par ailleurs, deux autres résistances (11, 12), ainsi que trois conducteurs (13, 14, 15).

L'interrupteur électronique (7) se compose d'un transistor de puissance de type MOS en technologie L2FET. Il est commandé directement à partir du circuit intégré (6). L'interrupteur (7) peut, grâce à sa technologie, recevoir une tension dont le niveau peut baisser jusqu'à 2 Volts environ, sans risque de dysfonctionnement.

Notons que l'interrupteur manuel (8) raccordé directement à l'interrupteur électronique (7) court-circuite ce dernier et permet à la lampe d'être alimentée directement par la ou les piles ou batteries.

Bien entendu, le circuit électronique (5) est avantageusement disposé sur une carte imprimée qui comprend une connexion (17) permettant son branchement sur le reste du circuit et notamment l'ampoule (2) et les piles ou les batteries (3).

Les moyens (4) permettant l'économie de consommation font une sorte de hachage de la tension déclinée en passant successivement d'une tension normale ou maximale (VN) à une tension inférieure (VI). Ce hachage se fait par exemple 300 fois par seconde et la durée (T1) pendant laquelle la tension maximale (VN) est maintenue, est égale à la durée (T2), pendant laquelle la tension inférieure (VI) est maintenue.

On notera notamment à la figure 5, que la tension inférieure (VI) est égale à zéro, mais il pourrait en être autrement et être par exemple égale à la moitié de la tension maximale (VN), comme cela est illustré aux figures 9 et 10.

Par ailleurs, on a vu que la durée (T1), pendant laquelle la tension maximale est maintenue, est égale à la durée (T2), pendant laquelle la tension inférieure l'est, mais il pourrait en être autrement, comme cela est illustré aux figures 7, 8 et 10. Ainsi, selon la figure 7, la durée (T1) de forte tension est supérieure à la durée (T2) de faible tension (VI), tandis qu'il en est du contraire dans l'illustration aux figures 8 et 10 où la durée (T1) de forte tension (VN) est inférieure à la durée (T2) de faible tension (VI).

Le dispositif d'éclairage (1) est destiné à être utilisé dans une lampe du type lampe frontale (50) comme le montre la figure 11. Cette lampe frontale (50) peut être destinée à être fixée sur un casque ou tout autre support ou directement sur la tête de l'utilisateur.

Cette lampe frontale (50) donnée à titre d'exemple comprend de façon connue en soi un boîtier d'ampoule (20) porté par un bandeau (21) qui porte par ailleurs, un boîtier de piles (22). Bien entendu, des fils d'alimentation (23) relient le boîtier de piles (22) au boîtier d'ampoule (20) et plus précisément, les piles (3) du boîtier de piles, à l'ampoule (2) du boîtier d'ampoule.

Il est ainsi prévu, derrière l'ampoule (2) une parabole réfléchissante (24) améliorant les caractéristiques de l'éclairage et notamment le champ de l'éclairage, ladite parabole est logée dans le boîtier d'ampoule (20).

Selon l'invention, le circuit électronique (5) est avantageusement disposé à proximité de la source d'énergie (3) comme dans le boîtier de pile (22) ou de la source lumineuse (2) comme dans le boîtier d'ampoule (20). Selon le mode de réalisation préféré de la lampe frontale (50) illustré figure 12, le circuit électronique (5) formant les moyens d'économie (4) est disposé avantageusement à l'intérieur du boîtier de pile (22). Ce circuit (5) comporte avantageusement des moyens de connexion (55) destinés à coopérer directement avec la batterie ou la pile formant la source d'énergie (3), ces moyens étant par exemple formés par des contacts de type keyston (Marque déposée). Ainsi, le circuit électronique (5) est disposé dans le boîtier (22) à l'extrémité supérieure de l'emplacement destiné à la pile (3), il présente sur sa face inférieure deux contacts (55a, 55b) qui viennent coopérer avec les pôles (56a, 56b) de la pile de manière à permettre son alimentation directe par celle-ci.

Selon ce mode de réalisation, l'interrupteur (8) destiné à permettre le changement de mode de fonctionnement du dispositif d'éclairage (1) est disposé sur le boîtier de pile de manière à pouvoir agir directement sur la plaquette (5) formant le circuit électronique, il est ainsi disposé sur la face latérale du boîtier de l'autre coté de la plaquette par rapport à la pile. Cet interrupteur est avantageusement dissocié de l'interrupteur principal de la lampe frontale qui commande sa mise en marche et son arrêt. Ainsi, le boîtier de pile (22) comporte le circuit électronique (5) et l'interrupteur (8), les fils d'alimentation (23) sont connectés directement sur la plaquette comportant le circuit (5) pour se connecter sur l'ampoule (2) du boîtier d'ampoule. Toutefois, il pourrait en être autrement et ces fils pourraient porter à leur extrémité des contacts destinés à coopérer avec des contacts du circuit électronique, ce dernier pouvant alors être disposé dans le boîtier de manière amovible pour permettre son remplacement ou sa réparation. Selon cette variante non représentée les contacts des fils pourraient être mis en contact de manière automatique avec les pôles de la pile à l'aide de moyens élastiques lorsque l'on enlève la plaquette formant le circuit électronique de manière a conserver un fonctionnement normal de la lampe frontale lorsqu'on enlève une plaquette défectueuse par exemple.

Selon un deuxième mode de réalisation non représenté, le circuit électronique est disposé dans le boîtier d'ampoule, il va de soi que le boîtier d'ampoule et le boîtier de pile pourraient être réalisés en un seul boîtier dans lequel on disposerait le circuit électronique. On peut noter que selon les différents modes de réalisation de la lampe frontale, les fils d'alimentation (23) reliant le boîtier de pile au boîtier d'ampoule peuvent être des fils de type blindés par exemple.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif d'éclairage (1), caractérisé en ce qu'il comprend au moins une ampoule (2) alimentée en courant continu par une source d'énergie électrique, tel que des piles ou des batteries (3) et des moyens (4) pour économiser l'énergie consommée par l'ampoule (2), les dits moyens (4) provoquant une succession de chutes de tension (30) et en ce que le dispositif d'éclairage est une lampe frontale (50).

2. Dispositif d'éclairage (1), selon la revendication 1, caractérisé en ce que les moyens d'économie (4) sont constitués par un circuit électronique (5) comprenant au moins un circuit de commande (6) commandant un interrupteur électronique (7).

3. Dispositif d'éclairage (1), selon la revendication 2, caractérisé en ce que la lampe frontale (50) comprend un boîtier d'ampoule (20) et un boîtier de piles (22) portés par un bandeau (21) et en ce que les moyens d'économie (4) sont constitués par un circuit électronique (5) disposé dans le boîtier de pile (22) ou dans le boîtier d'ampoule (20).

4. Dispositif d'éclairage (1), selon la revendication 3, caractérisé en ce que le circuit électronique (5) est disposé dans le boîtier de piles (22).

5. Dispositif d'éclairage (1), selon la revendication 4, caractérisé en ce que le circuit électronique (5) est disposé dans le boîtier de pile (22) à l'extrémité supérieure de l'emplacement destiné à la pile (3), il présente sur sa face inférieure deux contacts (55a, 55b) qui viennent coopérer avec les pôles (56a, 56b) de la pile.

6. Dispositif d'éclairage (1), selon l'une quelconque des revendications 2 à 5, caractérisé en ce qu'il est prévu un interrupteur manuel (8) permettant de passer d'un mode de fonctionnement normal assurant le plein éclairage, à un mode de fonctionnement économique, avec un plus faible éclairage, mode de fonctionnement selon lequel les moyens d'économie (4) sont mis en fonctionnement, lors du fonctionnement normal de plein éclairage, l'ampoule est alimentée en permanence à la tension maximale (VN), délivrée par les piles (3) et assure donc un éclairage maximal, tandis que lors du fonctionnement économique, selon lequel l'ampoule est alimentée alternativement en tension maximale (VN), pendant un temps (T1), de pleine tension et en tension inférieure (VI), pendant un temps (T2), de tension inférieure et ainsi de suite, ainsi, à une tension maximale (VN) succède une tension inférieure (VI) suivie d'une tension maximale (VN), à laquelle succède une tension inférieure (VI) et ainsi de suite.

7. Dispositif d'éclairage (1), selon l'une quelconque des revendications 2 à 6, caractérisé en ce que le circuit de commande (6) est un générateur de signaux du type circuit intégré générant des impulsions.

8. Dispositif d'éclairage (1), selon la revendication 6, caractérisé en ce que le générateur de signaux (6) est alimenté directement par la ou les piles (3) du dispositif d'éclairage au travers d'une diode de signal de type Schottky (16), qui permet de protéger le circuit intégré en cas d'inversion de polarité et ainsi, prévenir de tout montage erroné au niveau de la ou les piles ou batteries (3).

9. Dispositif d'éclairage (1), selon l'une quelconque des revendications 2 à 8, caractérisé en ce que l'interrupteur manuel (8) raccordé directement à l'interrupteur électronique (7) court-circuite ce dernier et permet à la lampe d'être alimentée directement par la ou les piles ou batteries.

10. Dispositif d'éclairage (1), selon l'une quelconque des revendications 4 à 8, caractérisé en ce que le générateur d'impulsion (6) génère des impulsions de commandes à 300 Hertz, dont le rapport cyclique est voisin de 45%.
